# EUROPEAN PATENT APPLICATION

(11) **EP 3 043 033 A1**
(43) Date of publication of application: **13.07.2016**
(21) Application number: 16150473.3
(22) Date of filing: 07.01.2016
(51) Int. Cl.: F01D 17/16, F02C 9/20, F02K 1/00, F04D 29/56, F02K 1/10, F02K 3/06, F02K 3/075, F02C 7/36

(54) **GAS TURBINE ENGINE WITH IMPROVED FUEL EFFICIENCY**

(30) Priority: 08.01.2015 US 201514592043
(71) Applicant: United Technologies Corporation, Farmington, CT 06032 (US)
(72) Inventor: HASEL, Karl L., Manchester, CT Connecticut 06040 (US); SMITH, Peter G., Wallingford, CT Connecticut 06492 (US); OCHS, Stuart S., Manchester, CT Connecticut 06040 (US)
(74) Representative: Hull, James Edward

(57) **Abstract**

A turbofan engine (10) includes a fan (20) driven by a low pressure turbine (18) through a gear reduction (22) having a gear ratio of greater than or equal to about 2.4. The low pressure turbine (18) has an expansion ratio greater than or equal to about 5. The fan (20) has a bypass ratio greater than or equal to about 8. The turbofan engine (10) may include a variable geometry fan exit guide vane (FEGV) system (42) having a multiple of circumferentially spaced radially extending fan exit guide vanes (50). Rotation of the fan exit guide vanes (50) between a nominal position and a rotated position selectively changes a fan bypass flow path to permit efficient operation at various flight conditions.

## Description

### BACKGROUND OF THE INVENTION

The present application relates to a gas turbine engine having an improved fuel consumption based upon a combination of operational parameters.

Gas turbine engines are known, and typically include a fan which drives air into a bypass duct, and also into a compressor section. The air is compressed in the compressor section, and delivered into a combustor section where it is mixed with fuel and burned. Products of this combustion pass downstream over turbine rotors, driving the turbine rotors to rotate.

In the past, a low pressure turbine has rotated at a given speed, and driven a low pressure compressor, and the fan at the same rate of speed. More recently, gear reductions have been included such that the fan in a low pressure compressor can be driven at different speeds.

### SUMMARY OF THE INVENTION

In a featured embodiment, a gas turbine engine has a core section defined about an axis, a fan section delivering a first portion of air into the core section and a second portion of air into a bypass duct. A bypass ratio is defined as the ratio of the second portion compared to the first portion. The bypass ratio is greater than or equal to about 8.0. The air delivered into the core section is delivered into a low pressure compressor, and then into a high pressure compressor. Air from the high pressure compressor is delivered into a combustion section where it is mixed with fuel and ignited. Products of the combustion pass downstream over a high pressure turbine section and then a low pressure turbine section. An expansion ratio across the low pressure turbine section is greater than or equal to about 5.0. The low pressure turbine section drives the low pressure compressor section, and the fan through a gear reduction, with the gear reduction having a gear ratio greater than or equal to about 2.4.

In another embodiment according to the previous embodiment, the gear ratio is greater than or equal to about 2.5.

In another embodiment according to the previous embodiment, the gear ratio is less than or equal to about 4.2.

In another embodiment according to the previous embodiment, the expansion ratio is greater than or equal to about 5.7.

In another embodiment according to the previous embodiment, the bypass ratio is greater than or equal to 10.

In another embodiment according to the previous embodiment, the fan has an outer diameter that is greater than an outer diameter of the low pressure turbine section.

In another embodiment according to the previous embodiment, the gear reduction is greater than or equal to 2.4.

In another embodiment according to the previous embodiment, the gear reduction is less than or equal to 4.2.

In another embodiment according to the previous embodiment, the expansion ratio is greater than or equal to 5.0.

In another embodiment according to the previous embodiment, the bypass ratio is greater than or equal to 8.

In another featured embodiment, a method of operating a gas turbine engine includes the steps of driving a fan to deliver a first portion of air into a bypass duct and a second portion of air into a low pressure compressor. A bypass ratio of the first portion to the second portion is greater than or equal to 8.0. The first portion of air is delivered into the low pressure compressor, into a high pressure compressor, and then into a combustion section. The air is mixed with fuel and ignited. Products of the combustion pass downstream over a high pressure turbine, and then a low pressure turbine. The low pressure turbine section is operated with an expansion ratio greater than or equal to 5.0. The low pressure turbine section is driven to rotate, and in turn rotates the low pressure compressor and fan through a gear reduction. The gear reduction has a ratio of greater than or equal to 2.4.

In another embodiment according to the previous embodiment, the gear reduction is greater than or equal to 2.4.

In another embodiment according to the previous embodiment, the gear reduction is less than or equal to 4.2.

In another embodiment according to the previous embodiment, the expansion ratio is greater than or equal to 5.0.

In another embodiment according to the previous embodiment, the bypass ratio is greater than or equal to 8.

In another embodiment according to the previous embodiment, the fan has an outer diameter that is greater than an outer diameter of the low pressure turbine section.

In another featured embodiment, a gas turbine engine has a core section defined about an axis. A fan section is mounted at least partially around the core section to define a fan bypass flow path. A plurality of fan exit guide vanes are in communication with the fan bypass flow path and are rotatable about an axis of rotation to vary an effective fan nozzle exit area for the fan bypass flow path. The plurality of fan exit guide vanes are independently rotatable, and are simultaneously rotatable. The plurality of fan exit guide vanes are mounted within an intermediate engine case structure, with each including a pivotable portion rotatable about the axis of rotation relative a fixed portion. The pivotable portion includes a leading edge flap. A bypass ratio compares the air delivered by the fan section into a bypass duct to the amount of air delivered into the core section that is greater than 10, expansion ratio across a low pressure turbine section that is greater than 5, and the low pressure turbine section driving the fan section through a gear reduction, with the gear reduction having a ratio greater than 2.5.

In another embodiment according to the previous embodiment, a high pressure turbine is included. Each of the low pressure turbine and the high pressure turbine drive a compressor rotor of a compressor section.

In another embodiment according to any of the previous embodiments, the gear reduction is positioned intermediate the low pressure turbine and the compressor rotor is driven by the low pressure turbine.

In another embodiment according to any of the previous embodiments, there is also a high pressure turbine and an intermediate pressure turbine both driving compressor rotors.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic partial fragmentary view of an exemplary gas turbine engine embodiment for use with the present invention;
Figure 1B is a perspective side partial fragmentary view of a FEGV system which provides a fan variable area nozzle;
Figure 2A is a sectional view of a single FEGV airfoil;
Figure 2B is a sectional view of the FEGV illustrated in Figure 2A shown in a first position;
Figure 2C is a sectional view of the FEGV illustrated in Figure 2A shown in a rotated position;
Figure 3A is a sectional view of another embodiment of a single FEGV airfo il;
Figures 3B is a sectional view of the FEGV illustrated in Figure 3A shown in a first position;
Figure 3C is a sectional view of the FEGV illustrated in Figure 3A shown in a rotated position;
Figure 4A is a sectional view of another embodiment of a single FEGV slatted airfoil with a ;
Figures 4B is a sectional view of the FEGV illustrated in Figure 4A shown in a first position; and
Figure 4C is a sectional view of the FEGV illustrated in Figure 4A shown in a rotated position.
Figure 5 shows another embodiment.
Figure 6 shows yet another embodiment.

### DETAILED DESCRIPTION

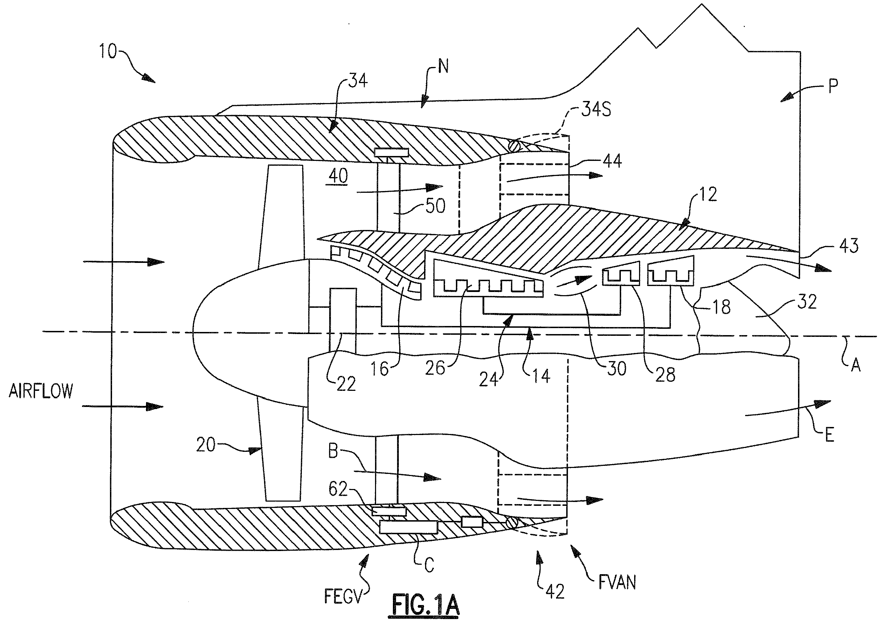

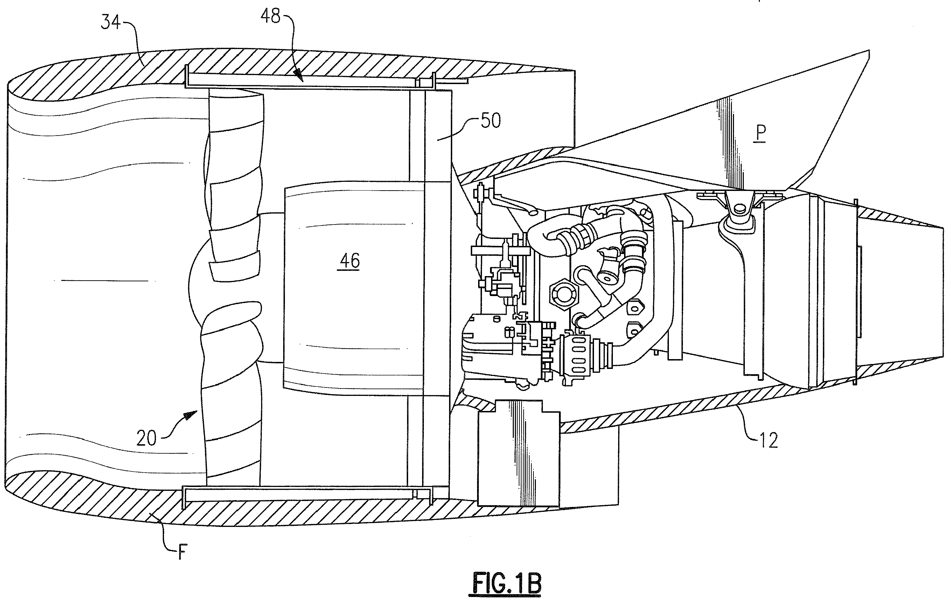

Figure 1 illustrates a general partial fragmentary schematic view of a gas turbofan engine 10 suspended from an engine pylon P within an engine nacelle assembly N as is typical of an aircraft designed for subsonic operation.

The turbofan engine 10 includes a core section within a core nacelle 12 that houses a low spool 14 and high spool 24. The low spool 14 includes a low pressure compressor 16 and low pressure turbine 18. The low spool 14 drives a fan section 20 directly or through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 in the disclosed embodiment is a high-bypass geared turbofan aircraft engine in which the engine 10 bypass ratio is greater than ten (10:1), the turbofan diameter is significantly larger than that of the low pressure compressor 16, and the low pressure turbine 18 has a pressure, or expansion, ratio greater than five (5:1). The gear train 22 may be an epicycle gear train such as a planetary gear system or other gear system with a gear reduction ratio of greater than 2.5. It should be understood, however, that the above parameters are exemplary of only one geared turbofan engine and that the present invention is likewise applicable to other gas turbine engines including direct drive turbofans.

Airflow enters a fan nacelle 34, which may at least partially surrounds the core nacelle 12. The fan section 20 communicates airflow into the core nacelle 12 for compression by the low pressure compressor 16 and the high pressure compressor 26. Core airflow compressed by the low pressure compressor 16 and the high pressure compressor 26 is mixed with the fuel in the combustor 30 then expanded over the high pressure turbine 28 and low pressure turbine 18. The turbines 28, 18 are coupled for rotation with respective spools 24, 14 to rotationally drive the compressors 26, 16 and, through the gear train 22, the fan section 20 in response to the expansion. A core engine exhaust E exits the core nacelle 12 through a core nozzle 43 defined between the core nacelle 12 and a tail cone 32.

A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B communicates through the generally annular bypass flow path 40 and may be discharged from the engine 10 through a fan variable area nozzle (FVAN) 42 which defines a variable fan nozzle exit area 44 between the fan nacelle 34 and the core nacelle 12 at an aft segment 34S of the fan nacelle 34 downstream of the fan section 20.

Referring to Figure 1B, the core nacelle 12 is generally supported upon a core engine case structure 46. A fan case structure 48 is defined about the core engine case structure 46 to support the fan nacelle 34. The core engine case structure 46 is secured to the fan case 48 through a multiple of circumferentially spaced radially extending fan exit guide vanes (FEGV) 50. The fan case structure 48, the core engine case structure 46, and the multiple of circumferentially spaced radially extending fan exit guide vanes 50 which extend therebetween is typically a complete unit often referred to as an intermediate case. It should be understood that the fan exit guide vanes 50 may be of various forms. The intermediate case structure in the disclosed embodiment includes a variable geometry fan exit guide vane (FEGV) system 36.

Thrust is a function of density, velocity, and area. One or more of these parameters can be manipulated to vary the amount and direction of thrust provided by the bypass flow B. A significant amount of thrust is provided by the bypass flow B due to the high bypass ratio. The fan section 20 of the engine 10 is nominally designed for a particular flight condition -- typically cruise at 0.8M and 35,000 feet (10,668 m).

As the fan section 20 is efficiently designed at a particular fixed stagger angle for an efficient cruise condition, the FEGV system 36 and/or the FVAN 42 is operated to adjust fan bypass air flow such that the angle of attack or incidence of the fan blades is maintained close to the design incidence for efficient engine operation at other flight conditions, such as landing and takeoff. The FEGV system 36 and/or the FVAN 42 may be adjusted to selectively adjust the pressure ratio of the bypass flow B in response to a controller C. For example, increased mass flow during windmill or engine-out, and spoiling thrust at landing. Furthermore, the FEGV system 36 will facilitate and in some instances replace the FVAN 42, such as, for example, variable flow area is utilized to manage and optimize the fan operating lines which provides operability margin and allows the fan to be operated near peak efficiency which enables a low fan pressure-ratio and low fan tip speed design; and the variable area reduces noise by improving fan blade aerodynamics by varying blade incidence. The FEGV system 36 thereby provides optimized engine operation over a range of flight conditions with respect to performance and other operational parameters such as noise levels.

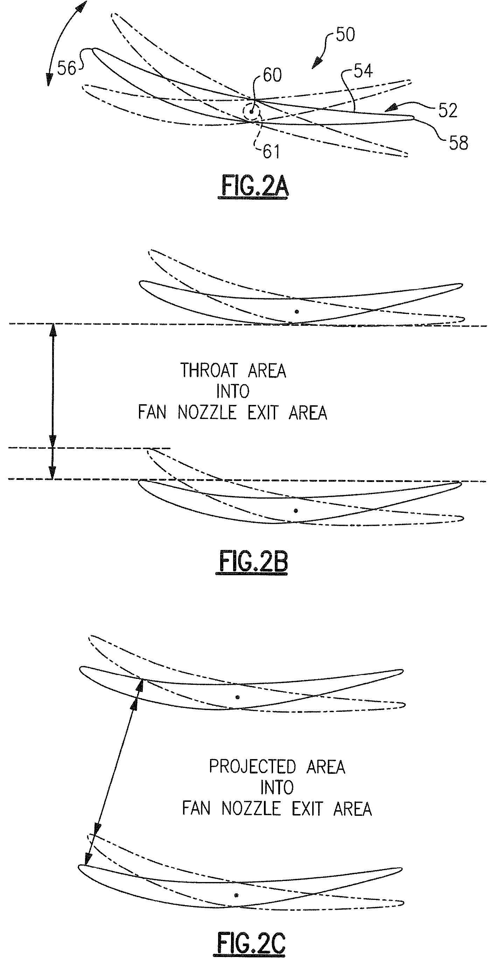

Referring to Figure 2A, each fan exit guide vane 50 includes a respective airfoil portion 52 defined by an outer airfoil wall surface 54 between the leading edge 56 and a trailing edge 58. The outer airfoil wall 54 typically has a generally concave shaped portion forming a pressure side and a generally convex shaped portion forming a suction side. It should be understood that respective airfoil portion 52 defined by the outer airfoil wall surface 54 may be generally equivalent or separately tailored to optimize flow characteristics.

Each fan exit guide vane 50 is mounted about a vane longitudinal axis of rotation 60. The vane axis of rotation 60 is typically transverse to the engine axis A, or at an angle to engine axis A. It should be understood that various support struts 61 or other such members may be located through the airfoil portion 52 to provide fixed support structure between the core engine case structure 46 and the fan case structure 48. The axis of rotation 60 may be located about the geometric center of gravity (CG) of the airfoil cross section. An actuator system 62 (illustrated schematically; Figure 1A), for example only, a unison ring operates to rotate each fan exit guide vane 50 to selectively vary the fan nozzle throat area (Figure 2B). The unison ring may be located, for example, in the intermediate case structure such as within either or both of the core engine case structure 46 or the fan case 48 (Figure 1A).

In operation, the FEGV system 36 communicates with the controller C to rotate the fan exit guide vanes 50 and effectively vary the fan nozzle exit area 44. Other control systems including an engine controller or an aircraft flight control system may also be usable with the present invention. Rotation of the fan exit guide vanes 50 between a nominal position and a rotated position selectively changes the fan bypass flow path 40. That is, both the throat area (Figure 2B) and the projected area (Figure 2C) are varied through adjustment of the fan exit guide vanes 50. By adjusting the fan exit guide vanes 50 (Figure 2C), bypass flow B is increased for particular flight conditions such as during an engine-out condition. Since less bypass flow will spill around the outside of the fan nacelle 34, the maximum diameter of the fan nacelle required to avoid flow separation may be decreased. This will thereby decrease fan nacelle drag during normal cruise conditions and reduce weight of the nacelle assembly. Conversely, by closing the FEGV system 36 to decrease flow area relative to a given bypass flow, engine thrust is significantly spoiled to thereby minimize or eliminate thrust reverser requirements and further decrease weight and packaging requirements. It should be understood that other arrangements as well as essentially infinite intermediate positions are likewise usable with the present invention.

By adjusting the FEGV system 36 in which all the fan exit guide vanes 50 are moved simultaneously, engine thrust and fuel economy are maximized during each flight regime. By separately adjusting only particular fan exit guide vanes 50 to provide an asymmetrical fan bypass flow path 40, engine bypass flow may be selectively vectored to provide, for example only, trim balance, thrust controlled maneuvering, enhanced ground operations and short field performance.

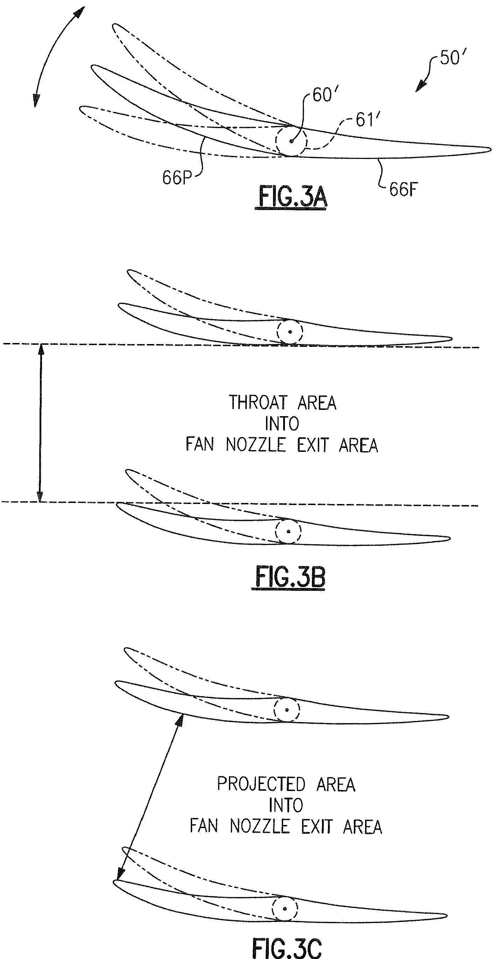

Referring to Figure 3A, another embodiment of the FEGV system 36' includes a multiple of fan exit guide vane 50' which each includes a fixed airfoil portion 66F and pivoting airfoil portion 66P which pivots relative to the fixed airfoil portion 66F. The pivoting airfoil portion 66P may include a leading edge flap which is actuatable by an actuator system 62' as described above to vary both the throat area (Figure 3B) and the projected area (Figure 3C).

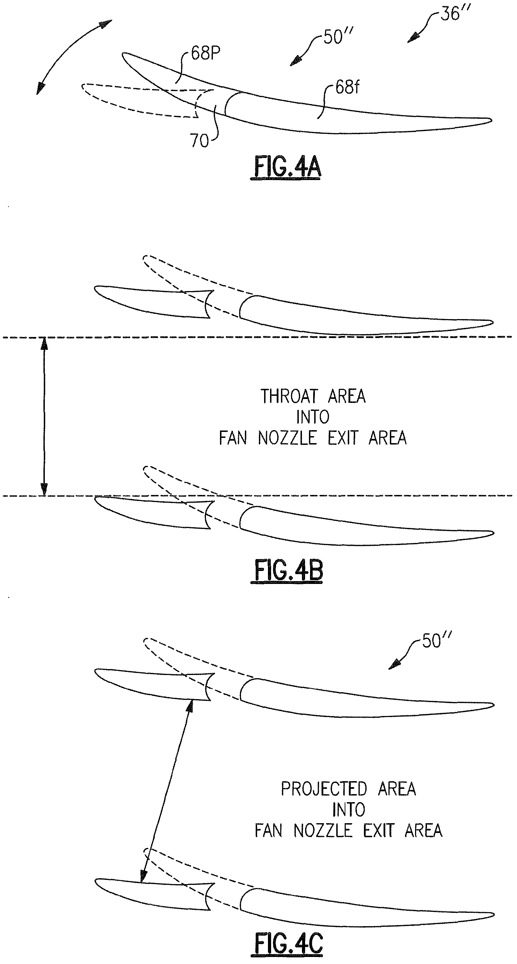

Referring to Figure 4A, another embodiment of the FEGV system 36" includes a multiple of slotted fan exit guide vane 50" which each includes a fixed airfoil portion 68F and pivoting and sliding airfoil portion 68P which pivots and slides relative to the fixed airfoil portion 68F to create a slot 70 vary both the throat area (Figure 4B) and the projected area (Figure 4C) as generally described above. This slatted vane method not only increases the flow area but also provides the additional benefit that when there is a negative incidence on the fan exit guide vane 50" allows air flow from the high-pressure, convex side of the fan exit guide vane 50" to the lower-pressure, concave side of the fan exit guide vane 50" which delays flow separation.

The use of the gear reduction 22 allows control of a number of operational features in combination to achieve improved fuel efficiency. In one embodiment, the expansion ratio (or pressure ratio) across the low pressure turbine, which is the pressure entering the low pressure turbine section divided by the pressure leaving the low pressure turbine section was greater than or equal to about 5.0. In another embodiment, it was greater than or equal to about 5.7. In this same combination, the bypass ratio was greater than or equal to about 8.0. As mentioned earlier, in other embodiments, the bypass ratio may be greater than 10.0. In these same embodiments, the gear reduction ratio is greater than or equal to about 2.4 and less than or equal to about 4.2. Again, in embodiments, it is greater than 2.5.

This combination provides a low pressure turbine section that can be very compact, and sized for very high aerodynamic efficiency with a small number of stages (3 to 5 as an example). Further, the maximum diameter of these stages can be minimized to improve installation clearance under the wings of an aircraft.

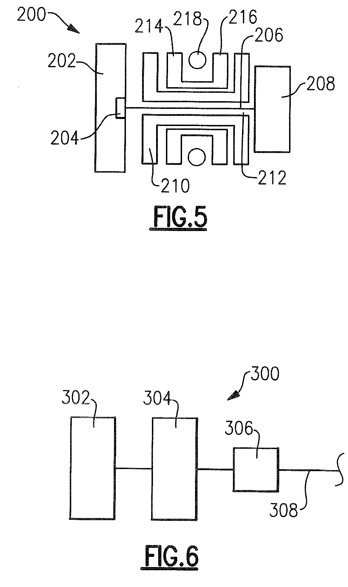

Figure 5 shows an embodiment 200, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 6 shows yet another embodiment 300 wherein a fan rotor 302 and a first stage compressor 304 rotate at a common speed. The gear reduction 306 (which may be structured as disclosed above) is intermediate the compressor rotor 304 and a shaft 308 which is driven by a low pressure turbine section.

The Figure 5 or Figure 6 engines may be utilized with the features disclosed above.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A gas turbine engine comprising:
a core section defined about an axis; and
a fan section delivering a first portion of air into the core section, and a second portion of air into a bypass duct, a bypass ratio being defined as the ratio, of the second portion compared to the first portion, being greater than or equal to about 8.0, the air delivered into the core section being delivered into a low pressure compressor, and then into a high pressure compressor, air from the high pressure compressor being delivered into a combustion section where it is mixed with fuel and ignited, and products of the combustion from the combustion section passing downstream over a high pressure turbine section and then a low pressure turbine section, and an expansion ratio across the low pressure turbine section being greater than or equal to about 5.0, said low pressure turbine section driving said low pressure compressor section, and driving said fan through a gear reduction, with said gear reduction having a gear ratio greater than or equal to about 2.4.

2. The gas turbine engine as set forth in claim 1, wherein said gear ratio is greater than or equal to about 2.5.

3. The gas turbine engine as set forth in claim 1, wherein said gear ratio is less than or equal to about 4.2.

4. The gas turbine engine as set forth in any of claims 1 to 3, wherein said expansion ratio is greater than or equal to about 5.7.

5. The gas turbine engine as set forth in any preceding claim, wherein said bypass ratio is greater than or equal to 10.

6. The gas turbine engine as set forth in any preceding claim, wherein said fan has an outer diameter that is greater than an outer diameter of the low pressure turbine section.

7. A method of operating a gas turbine engine including the step of:
driving a fan to deliver a first portion of air into a bypass duct, and a second portion of air into a low pressure compressor, a bypass ratio of the first portion to the second portion being greater than or equal to 8.0, the first portion of air being delivered into the low pressure compressor, into a high pressure compressor, and then into a combustion section, the air being mixed with fuel and ignited, and products of the combustion passing downstream over a high pressure turbine, and then a low pressure turbine, the low pressure turbine section being operated with an expansion ratio greater than or equal to 5.0, and said low pressure turbine section being driven to rotate, and in turn rotating said low pressure compressor, and rotating said fan through a gear reduction, said gear reduction having a ratio of greater than or equal to 2.4.

8. The method as set forth in claim 7, wherein said gear reduction is less than or equal to 4.2.

9. The method as set forth in claim 11, wherein said fan has an outer diameter that is greater than an outer diameter of the low pressure turbine section.

10. A gas turbine engine comprising:
a core section defined about an axis;
a fan section mounted at least partially around said core section to define a fan bypass flow path; and
a multiple of fan exit guide vanes in communication with said fan bypass flow path, said multiple of fan exit guide vane rotatable about an axis of rotation to vary an effective fan nozzle exit area for said fan bypass flow path, said multiple of fan exit guide vanes are independently rotatable, said multiple of fan exit guide vanes are simultaneously rotatable, said multiple of fan exit guide vanes are mounted within an intermediate engine case structure, each of said multiple of fan exit guide vanes include a pivotable portion rotatable about said axis of rotation relative a fixed portion, said pivotable portion includes a leading edge flap, wherein a bypass ratio for the gas turbine engine which compared the air being delivered by the fan section into a bypass duct to the amount of air delivered into the core section is greater than 10, expansion ratio across a low pressure turbine is greater than 5, and the low pressure turbine driving the fan section through a gear reduction, with the gear reduction having a ratio greater than 2.5.

11. The gas turbine engine as set forth in claim 10, further comprising a high pressure turbine, each of the low pressure turbine and the high pressure turbine driving a compressor rotor of a compressor section.

12. The gas turbine engine as set forth in claim 11, wherein the gear reduction is positioned intermediate the low pressure turbine and the compressor rotor driven by the low pressure turbine.

13. The gas turbine engine as set forth in claim 10, 11 or 12, wherein there is also a high pressure turbine and an intermediate pressure turbine both driving compressor rotors.
